# EUROPEAN PATENT SPECIFICATION

(11) **EP 0 548 417 B1**
(45) Date of publication and mention of the grant of the patent: **15.01.1997**
(21) Application number: 91311025.0
(22) Date of filing: 28.11.1991
(51) Int. Cl.: B29D 23/18, B32B 27/12, B32B 1/08, F16L 55/165

(54) **Method for manufacturing a pipe liner.**
Verfahren zur Herstellung einer rohrformigen Auskleidung.
Procédé pour la fabrication d'un revêtement tubulaire.

(43) Date of publication of application: 30.06.1993
(73) Proprietor: GET Inc., Iwai-shi, Ibaraki-ken (JP)
(72) Inventor: Endoh, Shigeru, Kasukabe-shi, Saitama-ken (JP)
(74) Representative: Whalley, Kevin

(56) References cited:
- EP-A- 0 009 402
- EP-A- 0 205 621
- EP-A- 0 392 026
- DE-A- 3 614 963
- DE-B- 1 279 933
- FR-A- 1 259 509
- FR-A- 2 013 911
- GB-A- 780 593
- GB-A- 836 879
- GB-A- 1 340 068
- WORLD PATENTS INDEX LATEST Week 9028, Derwent Publications Ltd., London, GB; AN 90-214283(28) & JP-A-2 145 317 (ASHIMORI IND KK) 4 June 1990

## Description

The present invention relates to a method for manufacturing a pipe liner, mainly to repair a defective pipe by internally lining it.

When an underground utility pipe or an underground industrial pipe, such as sewer pipe, gas pipe, or electric conduit pipe, is defective, the pipe is repaired without digging and disassembling the sections of the pipe. This method of repairing a pipe is known and practiced in the field of civil engineering (see U.S. Patent Application Serial No. 07/665,125).

This method of pipe repair comprises inserting a sufficiently long tubular airtight flexible liner into the defective pipe by fluid pressure. The tubular liner is made of a flexible resin-absorbable material, and has the outer surface coated with a hermetic film. More particularly, the tubular flexible liner is closed at one end and open at the other. The tubular flexible liner is first flattened. The closed end of the tubular liner is tied to a control rope. The open end of the tubular liner is made to gape wide and hooked at the end of the defective pipe in a manner such that the wide-opened end of the liner completely and fixedly covers and closes the pipe end. Then, a fluid under pressure is applied to the tubular liner such that the fluid urges the tubular liner to enter the defective pipe. Since one end of the tubular liner is hooked at the end of the pipe, it remains there while the rest of the flexible liner is turned inside out as it proceeds in the pipe. (This manner of insertion is conventionally called "reversing".) When the entire length of the tubular liner is reversed (or turned inside out) in the pipe, a control rope holds the closed end of the tubular liner to thereby control the length of the tubular liner in the pipe. Then the reversed tubular liner is pressed against the inner surface of the defective pipe, and the tubular flexible liner is hardened by heating, or by some other procedure depending on the hardening property of the material of the liner. In this manner it is possible to line the inside wall of the defective pipe with a rigid liner without digging the ground and disassembling the pipe sections.

According to the conventional method of manufacturing such tubular liner used for repairing pipes, one face of a long flexible resin-absorbable mat impregnated with a hardenable resin is coated with a hermetic film such as a plastic film and is cut into belts having a predetermined width; then the belt is wrapped round in a manner such that the end faces along the longer sides of the belt meet with each other; finally the two longer sides are sewed together with zigzag stitches (see Japanese Patent Kokoku No. 58-33098). In practice, after this sewing, the stitched area is sealed by means of a sealing tape or by applying a sealing resin; otherwise the reversing operation would be less smooth and effective.

However, in this conventional manufacturing method, when the flexibility of the resin-absorbable mat is too high or too low, or when the thickness of the mat is too small, or when the diameter of the cylindrical liner to be eventually formed will be less than about 100 mm, it has been very difficult to seal the area of stitching (seam line) after the longer sides (edges) of the belt cut from the mat were sewed together; this is because the stitched area of the surface of the tubular liner thus formed would not be smooth. Thus, to seal the sewed area of the tubular liner required a complicated and skilled operation.

The present invention was made with a view to solving this problem and others, and it is therefore an aim of the invention to provide a method of manufacturing a tubular pipe liner which is improved in that it is possible to easily form a tubular liner of which the inner or outer surface is completely sealed, from a resin-absorbable flexible material regardless of the material or the dimension of the resin-absorbable flexible material.

Attention is also drawn to the disclosure of EP-A-0392026.

The present invention provides a method of manufacturing a pipe liner for internally lining a pipe, comprising the steps of:
(i) forming a tubular body from an elongate rectangular belt of a resin-absorbable flexible material by connecting the longer sides of the rectangle together; and
(ii) coating either the inner or outer surface of the tubular body with an airtight plastic film,
characterized by causing the airtight plastic film to adhere closely to the resin-absorbable flexible material by removing the air trapped between the resin-absorbable flexible material and the airtight plastic film tube by drawing the air from the resin-absorbable flexible material, and heating and fusing the airtight plastic film to thereby coat the resin-absorbable flexible material with the airtight plastic film.

In a preferred embodiment of the invention, the step (ii) of the invention comprises the sub-steps of:
(a) inserting the tubular resin-absorbable flexible material into the airtight plastic film tube;
(b) wrapping the two-layer tube with a tubular film of release means;
(c) inserting an inflatable bag into the multi-layer tube;
(d) pneumatically inflating the inflatable bag to thereby radially press the multi-layer tube from inside to thus cause the multi-layer tube to become cylindrical;
(e) causing the airtight plastic film to adhere closely to the resin-absorbable flexible material by removing the air trapped between the resin-absorbable flexible material and the airtight plastic film tube by drawing the air from the resin-absorbable flexible material by means of a suction means; and
(f) heating and fusing the airtight plastic film by means of a shiftable electric heater to thereby coat the resin-absorbable flexible material with the airtight plastic film.

In an alternative embodiment, the step (ii) of the method of the invention comprises the sub-steps of:
(s) inserting the airtight plastic film tube into the tubular resin-absorbable flexible material;
(b) wrapping the two-layer tube with a tubular filmy airtight means;
(c) wrapping the three-layer tube with a tubular film of release means;
(d) inserting an inflatable bag into the multi-layer tube;
(e) pneumatically inflating the inflatable bag to thereby radially press the multi-layer tube from inside to thus cause the multi-layer tube to become cylindrical;
(f) causing the airtight plastic film to adhere closely to the resin-absorbable flexible material by removing the air trapped between the resin-absorbable flexible material and the airtight plastic film tube by drawing the air from the resin-absorbable flexible material by means of a suction means;
   and
(g) heating and fusing the airtight plastic film by means of a shiftable electric heater to thereby coat the resin-absorbable flexible material with the airtight plastic film.

As is clear from the above description, according to the invention, a highly airtight plastic tubular film is placed immediately inside or outside of a tubular body formed of a resin-absorbable flexible material, and an airtight inflatable flexible bag is used to press radially the plastic film and the resin-absorbable flexible material so that the latter two bodies become cylindrical, and then the air between the plastic film and the resin-absorbable flexible material is sucked out so that the two bodies are closely in contact with each other, and only then is the plastic film fused by heating means so that either one of the surfaces of the resin-absorbable flexible material is coated hermetically with the plastic film. In this matter, it is possible to obtain an airtight pipe liner irrespective of the desired size of the liner or the desired material of the resin-absorbable flexible material. Since the resin-absorbable flexible material is coated with the airtight plastic film after it is tubularly sewn or otherwise connected, there is no need to specially seal the seam area of the resin-absorbable flexible material, and thus labour costs and operational time are significantly reduced.

The invention will be further described, by way of example only, with reference to the accompanying drawings, in which:
Fig. 1 is a perspective view of a resin absorbable flexible belt the ends of which are curved round and sewed together along the longer sides to form a tube;
Fig. 2 is a perspective view of the same tube of Fig. 1 after the tubular body was shaped such that the end faces along the longer sides are opposed to each other;
Fig. 3 is a perspective view showing a four-layer tubular body consisting, from inward to outward, of an airtight inflatable flexible bag, the resin-absorbable flexible material, an airtight plastic film, and a filmy release means;
Fig. 4 is a perspective and cross-sectional view of the four-layer tubular body being inflated into a cylindrical shape and heated with a heating means; and
Fig. 5 is a cross-sectional view of a portion of the four-layer tubular body showing how a pressure reducing hose is attached to a portion of the four-layer tubular body.

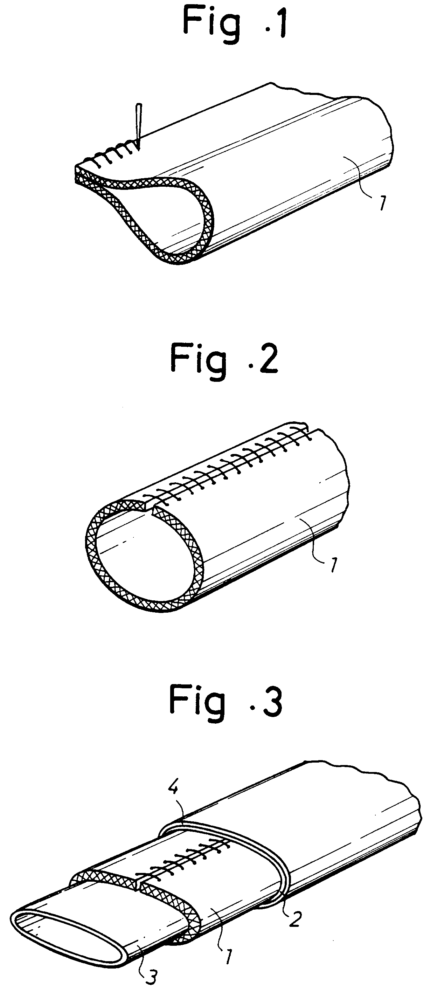

Figs. 1 through 5 illustrate the steps of the method of the present invention. Firstly, referring to Fig. 1, a lengthy rectangular resin-absorbable flexible material 1 is curved round in a manner such that the longer sides of the rectangle come together and the end faces along the longer sides of the rectangle become flush with each other. Then, the longer sides of the material 1 thus brought together are sewed together by means of a sewing machine. After the sewing, the tubular body of the resin-absorbable flexible material 1 is pulled at the stitching and forced to a shape such that the end faces along the longer sides are opposed to each other, as shown in Fig. 2.

The mode of the sewing of the material 1 can be rock sewing or straight sewing, or it is also possible to bind the longer sides of the material 1 together by needle punching such as stapling, by fusing and welding the sides together, or even by using an adhesive. The material for the resin-absorbable flexible material 1 can be a woven or nonwoven fabric made from polyester fiber, nylon fiber, acrylic fiber, polypropylene fiber, etc.

Next, the tubular resin-absorbable flexible material 1 is passed into a plastic film tube 2. Then, a highly airtight inflatable flexible bag 3 is inserted into the tubular resin-absorbable flexible material 1 so that a multi-layer tubular body as shown in Fig. 3 is obtained. The multi-layer tubular body is covered with a release film 4. The plastic film tube 2 as well as the release film 4 is manufactured by the known tubular film process wherein a molten resin is inflated and molded into a tube in a manner such that the thickness of the film is controlled to be thin and uniform; or it is possible to manufacture the plastic film tube 2 by patching together numerous pieces of plastic film. The material for the plastic film tube 2 can be selected from polyurethane, polyvinyl chloride (PVC), ethylene vinyl acetate (EVA), polyethylene, polypropylene, nylon, and a copolymer made from any of these.

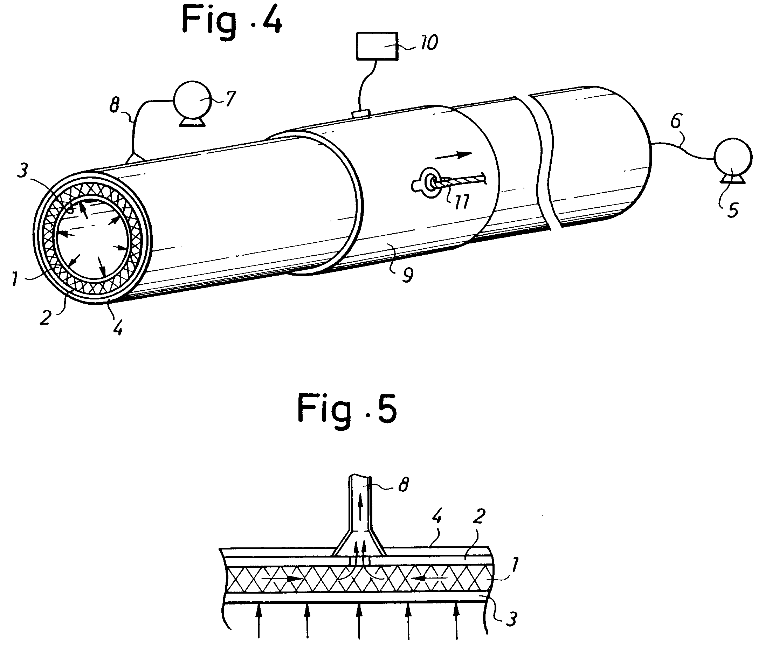

Next, both ends of the inflatable flexible bag 3 are closed and thus the inflatable flexible bag 3 becomes hermetically sealed. Then, the multi-layer tubular body is passed into a shiftable cylindrical heater 9. After this, as shown in Fig. 4, an air hose 6 is connected between a compressor 5 and an end portion of the sealed inflatable flexible bag 3. Also, a pressure reducing hose 8 connected to a vacuum pump 7 is attached to an end portion of the multi-layer tubular body, as shown in Fig. 4 and Fig. 5.

Then, the compressor 5 is operated so that compressed air is supplied into the inflatable flexible bag 3 via the air hose 6. Thus, the inflatable flexible bag 3 is inflated by the compressed air and presses the tubular resin-absorbable flexible material 1 against the plastic tube 2 covered with the release film 4. As a result, the multi-layer tubular body consisting of the flexible bag 3, the resin-absorbable flexible material 1, the plastic tube 2 and the release film 4 becomes cylindrical, as shown in Fig. 4.

Next, the vacuum pump 7 is operated so that the air trapped between the plastic tube 2 and the resin-absorbable flexible material 1 as well as the air existing in the resin-absorbable flexible material 1 itself is sucked and drawn out through the pressure reducing hose 8, whereby the plastic tube 2 with the release film 4 is adsorbed closely onto the outer surface of the resin-absorbable flexible material 1.

While thus keeping the plastic film tube 2 pressed tightly on the resin-absorbable flexible material 1, the shiftable cylindrical heater 9 is electrically energized by an electric power supply 10, and pulled in the direction indicated by the arrow by means of a rope 11 to shift along the length of the multi-layer tubular body, as shown in Fig. 4. Thus, the plastic tube 2 is heated and fused to thereby stick to the entire outer surface of the resin-absorbable flexible material 1. As the result, the outer surface of the resin-absorbable flexible material 1 including the seam portion is coated and thereby sealed with the plastic film 2. Since the plastic film tube 2 is covered with the release film 4, even if the fused plastic tube 2 touches the heater 9, it does not stick thereto.

When the coating of the resin-absorbable flexible material 1 with the plastic tube 2 is completed, the operations of the compressor 5 and the vacuum pump 7 are stopped, and the compressed air in the inflatable flexible bag 3 is vented into the atmosphere. Then, the inflatable flexible bag 3 is pulled out from the resin-absorbable flexible material 1, and there remains a desired airtight pipe liner ready to be used in repairing a defective pipe.

As described above, according to the present embodiment of the invention, the resin-absorbable flexible material 1 is first formed into a tubular body by sewing, and only after this the resin-absorbable flexible material 1 is externally coated with the plastic film 2, so that the seam portion of the tubular body of the resin-absorbable flexible material 1 is easily and compleletly sealed. This sealing can be attained without difficulty irrespective of the material or the size of the resin-absorbable flexible material 1.

In the above embodiment, the tubular resin-absorbable flexible material 1 is passed inside the plastic film 2, but alternatively it is possible to insert the plastic film 2 inside the resin-absorbable flexible material 1. In the latter case, however, it is necessary to provide a highly airtight filmy tube outside the resin-absorbable flexible material 1 so that the air trapped between the resin-absorbable flexible material 1 and the plastic film 2 can be effectively removed by the suction operation of the vacuum pump 7.

Although the thus prepared pipe liner is used as a highly effective lining material for a defective pipe, the liner can also be used, as it is, as a fluid transportation hose.

As is clear from the above description, according to the invention, a highly airtight plastic tubular film 2 is placed immediately inside or outside of the tubularly formed resin-absorbable flexible material 1, and an airtight inflatable flexible bag 3 is used to press radially the plastic film 2 and the resin-absorbable flexible material 1 so that the latter two bodies become cylindrical, and after this, the air between the plastic film 2 and the resin-absorbable flexible material 1 is sucked out so that the two bodies are closely in contact with each other, and only after this is the plastic film 2 fused by the heater 9 so that the resin-absorbable flexible material 1 is coated hermetically with the plastic film 2. In this manner, it is possible to obtain an excellent airtight pipe liner irrespective of the desired size of the liner or the desired material of the resin-absorbable flexible material. Since the resin-absorbable flexible material 1 is coated with the airtight plastic film 2 after it is tubularly sewn there is no need to specially seal the seam area of the resin-absorbable flexible material 1, and thus the labour cost and operational time are significantly reduced.

## Claims

1. A method of manufacturing a pipe liner for internally lining a pipe, comprising the steps of:
(i) forming a tubular body from an elongate rectangular belt of a resin-absorbable flexible material (1) by connecting the longer sides of the rectangle together; and
(ii) coating either the inner or outer surface of the tubular body with an airtight plastic film (2),
characterized by causing the airtight plastic film (2) to adhere closely to the resin-absorbable flexible material (1) by removing the air trapped between the resin-absorbable flexible material and the airtight plastic film tube by drawing the air from the resin-absorbable flexible material, and heating and fusing the airtight plastic film (2) to thereby coat the resin-absorbable flexible material (1) with the airtight plastic film.

2. A method as claimed in claim 1, characterized in that the said step (ii) comprises the sub-steps of:
(a) inserting the tubular resin-absorbable flexible material (1) into said airtight plastic film tube (2);
(b) wrapping the two-layer tube with a tubular film of release means (4);
(c) inserting an inflatable bag (3) into the multi-layer tube;
(d) pneumatically inflating the inflatable bag to thereby radially press the multi-layer tube from inside to thus cause the multi-layer tube to become cylindrical;
(e) causing the airtight plastic film (2) to adhere closely to the resin-absorbable flexible material (1) by removing the air trapped between the resin-absorbable flexible material and the airtight plastic film tube by drawing the air from the resin-absorbable flexible material by means of a suction means (7,8); and
(f) heating and fusing the airtight plastic film (2) by means of a shiftable electric heater (9) to thereby coat the resin-absorbable flexible material (1) with the airtight plastic film.

3. A method as claimed in claim 1, characterized in that the step (ii) comprises the sub-steps of:
(a) inserting said airtight plastic film tube (2) into the tubular resin-absorbable flexible material (1);
(b) wrapping the two-layer tube with a tubular filmy airtight means;
(c) wrapping the three-layer tube with a tubular film of release means (4);
(d) inserting an inflatable bag (3) into the multi-layer tube;
(e) pneumatically inflating the inflatable bag to thereby radially press the multi-layer tube from inside to thus cause the multi-layer tube to become cylindrical;
(f) causing the airtight plastic film (2) to adhere closely to the resin-absorbable flexible material (1) by removing the air trapped between the resin-absorbable flexible material and the airtight plastic film tube by drawing the air from the resin-absorbable flexible material by means of a suction means (7,8); and
(g) heating and fusing the airtight plastic film (2) by means of a shiftable electric heater (9) to thereby coat the resin-absorbable flexible material (1) with the airtight plastic film.

4. A method as claimed in any of claims 1 to 3, characterized in that in said step (i) the longer sides of the rectangular belt are connected together by sewing.

5. A method as claimed in any of claims 1 to 3, characterized in that in said step (i) the longer sides of the rectangular belt are connected together by stapling.

6. A method as claimed in any of claims 1 to 3, characterized in that in said step (i) the longer sides of the rectangular belt are connected together by fusing the sides together.

7. A method as claimed in any of claims 1 to 3, characterized in that in said step (i) the longer sides of the rectangular belt are connected together by means of an adhesive.

## Patentansprüche

1. Verfahren zur Herstellung einer Rohrbeschichtung zum Auskleiden des Inneren eines Rohres, mit den folgenden Schritten:
(i) Bilden eines schlauchförmigen Körpers aus einem länglichen, rechteckigen Streifen aus zum Absorbieren von Harz befähigtem, flexiblem Material (1) durch Verbinden der längeren Seiten des Rechtecks miteinander; und
(ii) Beschichten entweder der inneren oder der äußeren Oberfläche des schlauchförmigen Körpers mit einer luftdichten Kunststoffolie (2),
dadurch gekennzeichnet, daß man die luftdichte Kunststoffolie (2) veranlaßt, eng an dem zum Absorbieren von Harz befähigten, flexiblen Material (1) anzuhaften, indem man die Luft entfernt, die zwischen dem zum Absorbieren von Harz befähigten, flexiblen Material und dem Schlauch aus luftdichter Kunststoffolie eingeschlossen ist, indem man die Luft aus dem zum Absorbieren von Harz befähigten, flexiblen Material absaugt, und indem man die luftdichte Kunststoffolie (2) erwärmt und verschmelzt, um hierdurch das zum Absorbieren von Harz befähigte, flexible Material (1) mit der luftdichten Kunststoffolie zu beschichten.

2. Verfahren, wie beansprucht in Anspruch 1, dadurch gekennzeichnet, daß der Schritt (ii) die folgenden Unterschritte aufweist:
(a) Einführen des schlauchförmigen, zum Absorbieren von Harz befähigten, flexiblen Materials (1) in den Schlauch aus luftdichter Kunststoffolie (2);
(b) Umwickeln des aus zwei Schichten gebildeten Schlauches mit einer schlauchförmigen Folie aus Trennmittel (4);
(c) Einführen eines aufblasbaren Beutels (3) in den vielschichtigen Schlauch;
(d) pneumatisches Aufpumpen des aufblasbaren Beutels, um hierdurch gegen den vielschichtigen Schlauch von der Innenseite her radial anzudrücken, um somit den vielschichtigen Schlauch zu veranlassen, zylindrisch zu werden;
(e) Veranlassen der luftdichten Kunststoffolie (2), eng an dem zum Absorbieren von Harz befähigten, flexiblen Material (1) anzuhaften, indem man die Luft entfernt, die zwischen dem zum Absorbieren von Harz befähigten Material und dem Schlauch aus luftdichter Kunststoffolie eingeschlossen ist, indem man die Luft aus den zum Absorbieren von Harz befähigten, flexiblen Material mittels Saugmitteln (7, 8) absaugt; und
(f) Erwärmen und. Verschmelzen der luftdichten Kunststoffolie (2) mittels einer verschieblichen, elektrischen Heizeinrichtung (9), um hierdurch das zum Absorbieren von Harz befähigte, flexible Material (1) mit der luftdichten Kunststoffolie zu beschichten.

3. Verfahren, wie beansprucht in Anspruch 1, dadurch gekennzeichnet, daß der Schritt (ii) die folgenden Unterschritte aufweist:
(a) Einführen des luftdichten Kunststofffolienschlauches (2) in das schlauchförmige, zum Absorbieren von Harz befähigte, flexible Material (1);
(b) Umwickeln des zweischichtigen Schlauches mit schlauchförmigen, folienartigen, luftdichten Mitteln;
(c) Umwickeln des Drei-Lagen-Schlauches mit einer schlauchförmigen Folie aus Trennmittel (4);
(d) Einführen eines aufblasbaren Beutels (3) in den vielschichtigen Schlauch;
(e) pneumatisches Aufpumpen des aufblasbaren Beutels, um hierdurch gegen den vielschichtigen Schlauch von der Innenseite her radial anzudrücken, um somit den vielschichtigen Schlauch zu veranlassen, zylindrisch zu werden;
(f) Veranlassen der luftdichten Kunststoffolie (2), eng an dem zum Absorbieren von Harz befähigten, flexiblen Material (1) anzuhaften, indem man die Luft entfernt, die zwischen den zum Absorbieren von Harz befähigten, flexiblen Material und dem luftdichten Kunststoffolienschlauch eingeschlossen ist, indem man die Luft aus dem zum Absorbieren von Harz befähigten, flexiblen Material mittels Saugmitteln (7, 8) absaugt; und
(g) Erwärmen und Verschmelzen der luftdichten Kunststoffolie (2) mittels einer verschieblichen, elektrischen Heizeinrichtung (9), um hierdurch das zum Absorbieren von Harz befähigte, flexible Material (1) mit der luftdichten Kunststoffolie zu beschichten.

4. Verfahren, wie beansprucht in irgendeinem der Ansprüche 1 bis 3, dadurch gekennzeichnet, daß im Schritt (i) die längeren Seiten des rechteckigen Streifens durch Nähen miteinander verbunden werden.

5. Verfahren, wie beansprucht in irgendeinem der Ansprüche 1 bis 3, dadurch gekennzeichnet, daß im Schritt (i) die längeren Seiten des rechteckigen Streifens durch Klammern miteinander verbunden werden.

6. Verfahren, wie beansprucht in irgendeinem der Ansprüche 1 bis 3, dadurch gekennzeichnet, daß im Schritt (i) die längeren Seiten des rechteckigen Streifens durch Zusammenschmelzen bzw. Zusammenschweißen miteinander verbunden werden.

7. Verfahren, wie beansprucht in irgendeinem der Ansprüche 1 bis 3, dadurch gekennzeichnet, daß im Schritt (i) die längeren Seiten des rechteckigen Streifens miteinander durch einen Kleber verbunden werden.

## Revendications

1. Méthode de fabrication d'un revêtement de tuyau pour le revêtement intérieur d'un tuyau, comprenant les étapes consistant à:
(i) former un corps tubulaire à partir d'une courroie rectangulaire allongée faite d'un matériau flexible (1) pouvant absorber la résine en reliant l'un à l'autre les grands côtés du rectangle; et
(ii) revêtir soit la surface interne, soit la surface externe du corps tubulaire avec un film plastique (2) étanche à l'air, caractérisée en ce que l'on fait adhérer de manière étanche le film plastique (2) étanche à l'air sur le matériau flexible (1) pouvant absorber la résine en éliminant l'air piégé entre le matériau flexible pouvant absorber la résine et le tube de film plastique étanche à l'air en extrayant l'air du matériau flexible pouvant absorber la résine, et en chauffant et faisant fondre le film plastique (2) étanche à l'air afin de revêtir le matériau flexible (1) pouvant absorber la résine avec le film plastique étanche à l'air.

2. Méthode selon la revendication 1, caractérisée en ce que ladite étape (ii) comprend les sous-étapes consistant à:
(a) insérer le matériau flexible tubulaire (1) pouvant absorber la résine dans ledit tube de film plastique (2) étanche à l'air;
(b) envelopper le tube à deux couches avec un film tubulaire d'un moyen de séparation (4);
(c) insérer un sac gonflable (3) dans le tube multicouche;
(d) gonfler de manière pneumatique le sac gonflable afin de presser radialement le tube multicouche de l'intérieur dans le but d'amener le tube multicouche à devenir cylindrique;
(e) faire adhérer de manière étanche le film plastique (2) étanche à l'air sur le matériau flexible (1) pouvant absorber la résine en éliminant l'air piégé entre le matériau flexible pouvant absorber la résine et le tube de film plastique étanche à l'air en extrayant l'air du matériau flexible pouvant absorber la résine à l'aide d'un moyen d'aspiration (7, 8); et
(f) chauffer et faire fondre le film plastique (2) étanche à l'air au moyen d'un dispositif de chauffage électrique mobile (9) afin de revêtir le matériau flexible (1) pouvant absorber la résine avec le film plastique étanche à l'air.

3. Méthode selon la revendication 1, caractérisée en ce que l'étape (ii) comprend les sous-étapes consistant à:
(a) insérer ledit tube de film plastique (2) étanche à l'air dans le matériau flexible tubulaire (1) pouvant absorber la résine;
(b) envelopper le tube à deux couches avec un moyen tubulaire étanche à l'air formant une pellicule;
(c) envelopper le tube à trois couches avec un film tubulaire d'un moyen de séparation (4);
(d) insérer un sac gonflable (3) dans le tube multicouche;
(e) gonfler de manière pneumatique le sac gonflable afin de presser radialement le tube multicouche de l'intérieur dans le but d'amener le tube multicouche à devenir cylindrique;
(f) faire adhérer de manière étanche le film plastique (2) étanche à l'air sur le matériau flexible (1) pouvant absorber la résine en éliminant l'air piégé entre le matériau flexible pouvant absorber la résine et le tube de film plastique étanche à l'air en extrayant l'air du matériau flexible pouvant absorber la résine à l'aide d'un moyen d'aspiration (7, 8); et
(g) chauffer et faire fondre le film plastique (2) étanche à l'air au moyen d'un dispositif de chauffage électrique mobile (9) afin de revêtir le matériau flexible (1) pouvant absorber la résine avec le film plastique étanche à l'air.

4. Méthode selon l'une quelconque des revendications 1 à 3, caractérisée en ce que, dans ladite étape (i), les grands côtés de la courroie rectangulaire sont reliés l'un à l'autre par une couture.

5. Méthode selon l'une quelconque des revendications 1 à 3, caractérisée en ce que, dans ladite étape (i), les grands côtés de la courroie rectangulaire sont reliés l'un à l'autre par agrafage.

6. Méthode selon l'une quelconque des revendications 1 à 3, caractérisée en ce que, dans ladite étape (i), les grands côtés de la courroie rectangulaire sont reliés l'un à l'autre en faisant fondre les côtés ensemble.

7. Méthode selon l'une quelconque des revendications 1 à 3, caractérisée en ce que, dans ladite étape (i), les grands côtés de la courroie rectangulaire sont reliés l'un à l'autre au moyen d'un adhésif.
